(19) Europäisches Patentamt
European Patent Office
Office européen des brevets

(11) **EP 4 727 010 A1**

(12) **EUROPÄISCHE PATENTANMELDUNG**

(43) Veröffentlichungstag:
**15.04.2026  Patentblatt 2026/16**

(21) Anmeldenummer: **24205281.9**

(22) Anmeldetag: **08.10.2024**

(51) Internationale Patentklassifikation (IPC):
***H02S 50/00*** *(2014.01)*

(52) Gemeinsame Patentklassifikation (CPC):
**H02S 50/00; H02S 50/10**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **FRONIUS INTERNATIONAL GmbH
4643 Pettenbach (AT)**

(72) Erfinder:
• **KREUZER, Harald
4643 Pettenbach (AT)**
• **BERNHOFER, Lukas
4643 Pettenbach (AT)**
• **PFEIL, Reimar
4643 Pettenbach (AT)**

(74) Vertreter: **Bratovic, Nino Maria
Bratovic IP
Lissi-Kaeser-Straße 20
80797 München (DE)**

(54) **SICHERHEITSVORRICHTUNG FÜR EINE PHOTOVOLTAIK-ANLAGE, WECHSELRICHTER, PHOTOVOLTAIK-ANLAGE, UND VERFAHREN ZUM BETREIBEN EINER PHOTOVOLTAIK-ANLAGE**

(57)    Die Erfindung stellt eine Sicherheitsvorrichtung (100) für eine Photovoltaik-Anlage mit mindestens zwei parallelgeschalteten Photovoltaik-Modulsträngen (200), welche in einer Sammelleitung (300) zusammengeführt werden, an welche ein DC-Regelkreis (110) angeschlossen ist, sowie eine solche Photovoltaik-Anlage (1000), einen Wechselrichter (400) mit einer solchen Sicherheitsvorrichtung (100) sowie ein Verfahren zum Betreiben einer solchen Photovoltaik-Anlage (100) bereit. Die Sicherheitsvorrichtung (100) umfasst zumindest:
eine Lichtbogen-Detektionseinrichtung, LBDE (120), welche dazu eingerichtet ist, einen Lichtbogen in der Photovoltaik-Anlage (1000) zu detektieren;
eine Ermittlungseinrichtung (130) zum Ermitteln einer auf den Lichtbogen zurückgehenden elektrischen Leistung (3);
eine Regelgröße-Erzeugungseinrichtung, RGEE (140), welche dazu eingerichtet ist, basierend auf der ermittelten elektrischen Leistung (3) eine Regelgröße (1) zu erzeugen; und
eine Regelungseinrichtung, RE (150), welche dazu eingerichtet ist, in Reaktion auf ein Auslöseereignis, durch Einstellen einer Gleichspannung oder eines Gleichstroms an dem DC-Regelkreis (110) die Regelgröße (1) auf einen Sollwert (2) zu regeln.

Fig. 1

**Beschreibung**

Gebiet der Erfindung

Die Erfindung betrifft eine Sicherheitsvorrichtung für eine Photovoltaik-Anlage mit mindestens zwei parallelgeschalteten Photovoltaik-Modulsträngen, einen Wechselrichter mit einer solchen Sicherheitsvorrichtung, eine Photovoltaik-Anlage mit einem solchen Wechselrichter, sowie ein Verfahren zum Betreiben einer solchen Photovoltaik-Anlage. Die Sicherheitsvorrichtung ist insbesondere dazu ausgelegt, einen Lichtbogen zu detektieren und Gegenmaßnahmen einzuleiten.

Technischer Hintergrund

In Photovoltaik-Anlagen kann es immer wieder zu Lichtbögen kommen. Es existieren umfangreiche normative Vorschriften, welche Vorgaben machen, wie schnell ein Lichtbogen zu löschen ist und wie häufig ein solches Ereignis eintreten darf, ehe weiter gehende Maßnahmen erforderlich werden, etwa ein längerfristiges Abschalten der Photovoltaik-Anlage, eine Wartung durch eine Fachperson, und dergleichen mehr.

Während einerseits die jeweils gültigen Vorschriften eingehalten werden müssen, besteht andererseits ein Interesse daran, dass Photovoltaik-Anlage möglichst ohne Einschränkungen dauerhaft in Betrieb gehalten werden können um die Energieproduktion nicht zu unterbrechen. Hierzu wird beispielsweise beständig an präziseren Methoden zur Erkennung von Lichtbögen gearbeitet, welche möglichst keine falschen Negativerkennungen (d.h. fehlende Erkennungen eines aufgetretenen Lichtbogens) und dabei möglichst wenig falsche Positiverkennungen (d.h. eine fehlerhafte Erkennung eines nicht aufgetretenen Lichtbogens) bewirken.

Zur allgemeinen theoretischen Beschreibung eines Lichtbogens sind verschiedene Modelle bekannt, etwa aus den wissenschaftlichen Veröffentlichungen von Hertha Marks Ayrton, "The Electric Arc", New York, D. Van Nostrand Company, 1902; von J. Paukert, "The arc voltage and arc resistance of IV fault Arcs", in "Proceedings of the 7th International Symposium on Switching Arc Phenomena", 1993, Seiten 49-51; oder von A. D. Stokes und W. T. Oppenlander, "Electric arcs in open air", in "Journal of Physics D: Applied Physics", 1991, Seiten 26-35.

Gemäß einigen Normen muss eine Sicherheitsprozedur ausgelöst werden, wenn eine bestimmte Energieabgabe des Lichtbogens eingetreten ist. Während diese in einem Testaufbau präzise messbar ist, gestaltet sich dies bei Photovoltaik-Anlagen im Einsatz schwierig.

Die in solchen Sicherheitsprozeduren möglichen Maßnahmen sind beschränkt. Eine im Stand der Technik bekannte Maßnahme ist es, einen elektrischen Strom an einem Wechselrichter der Photovoltaik-Anlage auf Null zu regeln. An manchen Orten auftretende Lichtbögen können jedoch durch diese Maßnahme kaum, oder nur schwer, gelöscht werden, insbesondere wenn die Photovoltaik-Anlage mindestens zwei parallelgeschaltete Photovoltaik-Modulstränge umfasst.

Insbesondere wenn zwei oder mehr parallelgeschaltete Modulstränge (oder: Modulfelder) über eine Sammelleitung an einem DC/DC-Wandler oder einem Wechselrichter angeschlossen sind, gibt es im Stand der Technik das Problem, dass der Wechselrichter an der Sammelleitung nur eine einzige Spannung einstellen, oder nur einen einzigen Strom regeln kann, und somit ein Null-Strom einen an einem der Modulstränge vorliegenden Lichtbogen nicht zwingend löschen kann.

Ist beispielsweise einer der Modulstränge aktuell verschattet und agiert bereits als Verbraucher elektrischer Energie, würde bei einer Regelung auf einen Strom von Null (oder: Nullstrom) am Wechselrichter (d.h. ein Anfahren des Leerlaufs) potenziell noch ein positiver Strom an dem anderen Modulstrang verbleiben können, und somit der Lichtbogen möglicherweise weiter brennen können.

Zusammenfassung der Erfindung

Es ist eine Aufgabe der vorliegenden Erfindung, eine verbesserte Sicherheitsvorrichtung für eine Photovoltaik-Anlage mit mindestens zwei parallelgeschalteten Photovoltaik-Modulsträngen, einen verbesserten Wechselrichter, eine verbesserte Photovoltaik-Anlage, sowie ein verbessertes Verfahren zum Betreiben einer solchen Photovoltaik-Anlage bereitzustellen. Insbesondere sollen die Mittel und Methoden, Lichtbögen zuverlässig zu löschen, verbessert werden.

Diese Aufgabe wird durch die Gegenstände der unabhängigen Patentansprüche gelöst.

Dementsprechend wird gemäß einem ersten Aspekt eine Sicherheitsvorrichtung für eine Photovoltaik-Anlage mit mindestens zwei parallelgeschalteten Photovoltaik-Modulsträngen, welche in einer Sammelleitung zusammengeführt werden, an welche ein DC-Regelkreis angeschlossen ist, bereitgestellt wobei die Sicherheitsvorrichtung zumindest umfasst:

eine Lichtbogen-Detektionseinrichtung, LBDE, welche dazu eingerichtet ist, einen Lichtbogen in der Photovoltaik-Anlage zu detektieren;

eine Ermittlungseinrichtung zum Ermitteln einer auf den Lichtbogen zurückgehenden elektrischen Leistung;

eine Regelgröße-Erzeugungseinrichtung, RGEE, welche dazu eingerichtet ist, basierend auf (oder: unter Verwendung von) der ermittelten elektrischen Leistung eine Regelgröße zu erzeugen; und

eine Regelungseinrichtung, RE, welche dazu eingerichtet ist, in Reaktion auf ein Auslöseereignis, durch Einstellen einer Gleichspannung oder eines Gleichstroms an dem DC-Regelkreis die Regelgröße auf einen Sollwert zu regeln.

Eine grundlegende Idee der vorliegenden Erfindung ist es somit, eine Regelungseinrichtung vorzusehen, welche eine Regelgröße regelt, welche auf konkrete Eigenschaften eines konkreten Lichtbogens zurückgeht, um somit besonders effektiv diesen konkreten Lichtbogen zu löschen.

Wie im Vorangehenden bereits erläutert wurde, bestehen im Stand der Technik Schwierigkeiten, einen Lichtbogen in einem von mehreren parallelgeschalteten Photovoltaik-Modulsträngen zu löschen, insbesondere weil andere, zu diesem parallelgeschaltete Photovoltaik-Modulstränge gleichzeitig als Verbraucher agieren könnten. An der Sammelleitung, welche diese parallelgeschalteten Photovoltaik-Modulstränge zusammenfasst, und somit am Eingang eines Wechselrichters, kann somit ein Nullstrom vorliegen, obwohl innerhalb der Parallelschaltung weiter hohe Ströme fließen. Bei den hierin behandelten Lichtbögen handelt es sich insbesondere um Gleichstrom-Lichtbögen (oder: DC-Lichtbögen).

Mit der vorliegenden Erfindung ist es hingegen möglich, eine elektrische Leistung festzustellen, die auf den zu löschenden Lichtbogen zurückgeht (insbesondere: von diesem erzeugt oder beeinflusst oder verändert wird), und darauf basierend eine Regelgröße zu erzeugen, derart, dass eine gezielte Regelung zum Löschen dieses Lichtbogens durchgeführt werden kann.

Für das Detektieren des Lichtbogens durch die Lichtbogen-Detektionseinrichtung gibt es im Stand der Technik vielfältige Methoden (z.B. Spektralanalysen von Stromleitungen (insbesondere der Sammelleitung) der Photovoltaik-Anlage), die hier allesamt verwendet werden können. Die eigentliche Leistung des Lichtbogens selbst kann für gewöhnlich nicht direkt gemessen werden, da der Lichtbogen an irgendeiner Stelle an einem der Modulstränge auftreten kann. Der brennende Lichtbogen hat aber ein typisches Rauschverhalten, welches er, wenn er brennt, den Stromleitungen der Photovoltaik-Anlage und damit auch der Sammelleitung aufprägt, und welches daher erfasst und zu seiner Detektion verwendet werden kann.

Der Begriff der "Photovoltaik-Anlage", wie er hier verwendet wird, kann insbesondere alle Elemente umfassen, welche zwischen der einfallenden Sonnenstrahlung einerseits und einem Wechselstromausgang eines Wechselrichters andererseits angeordnet sind, also insbesondere Photovoltaik-Module, Modulelektroniken, Schutzgeräte (Leistungsschalter und dergleichen), die Sammelleitung, den DC-Regelkreis, sowie den Wechselrichter selbst.

Bei dem DC-Regelkreis kann es sich insbesondere um einen DC-DC-Regelkreis handeln, beides bevorzugt als Teil eines Wechselrichters.

Gemäß einigen bevorzugten Ausführungsformen, Varianten oder Verfeinerungen von Ausführungsformen ist die Ermittlungseinrichtung eine Lichtbogen-Leistungs-Messeinrichtung, LBLME, für eine Hochfrequenz-, HF-, Komponente, welche dazu eingerichtet ist, die auf den Lichtbogen zurückgehende elektrische Leistung zu messen.

Die HF-Komponente kann dabei eine leitungsgebundene und/oder eine strahlungsbasierte HF-Komponente sein. Dementsprechend kann die Lichtbogen-Leistungs-Messeinrichtung, LBLME, auch in oder an einer elektrischen Leitung angeordnet sein bzw. als eine Antenne zum Empfang der strahlungsbasierten HF-Komponente ausgebildet sein. Eine solche Antenne kann beispielsweise räumlich innerhalb eines Modulstrangs und/oder zwischen zwei Modulsträngen angeordnet sein. Es kann eine Vielzahl von Lichtbogen-Leistungs-Messeinrichtungen, LBLME, in oder an ein und derselben Photovoltaik-Anlage vorgesehen sein, um bessere Messergebnisse bereitzustellen und/oder eine Lokalisierung eines brennenden Lichtbogens vorzunehmen.

Gemäß einigen bevorzugten Ausführungsformen, Varianten oder Verfeinerungen von Ausführungsformen umfasst die Regelgröße-Erzeugungseinrichtung, RGEE, außerdem eine Lichtbogen-Leistungs-Schätzeinheit, LBLSE, welche dazu eingerichtet ist, eine initiale Lichtbogen-Leistung des Lichtbogens zu schätzen (beispielsweise einmalig für jeden detektierten Lichtbogen). Die Regelgröße-Erzeugungseinrichtung, RGEE, ist vorteilhaft außerdem dazu eingerichtet, aus der geschätzten initialen Lichtbogen-Leistung sowie aus der ermittelten, auf den Lichtbogen zurückgehenden elektrischen Leistung Umrechnungsparameter zu bestimmen. Die Regelgröße-Erzeugungseinrichtung, RGEE, kann weiterhin dazu eingerichtet sein, daraufhin die Regelgröße basierend auf der ermittelten elektrischen Leistung zu erzeugen.

Insbesondere kann die auf den Lichtbogen zurückgehende elektrische Leistung eine Summenleistung über ein vorbestimmtes Frequenzband umfassen, insbesondere im Bereich, oder umfassend den Bereich zwischen 0 Hz und 100 kHz.

Gemäß einigen bevorzugten Ausführungsformen, Varianten oder Verfeinerungen von Ausführungsformen ist die Regelgröße-Erzeugungseinheit, RGEE, dazu eingerichtet, laufend (insbesondere regelmäßig/periodisch) eine aktuelle Lichtbogen-Leistung des Lichtbogens mithilfe der Umrechnungsparameter zu berechnen und diese als Regelgröße zu verwenden.

EP 4 727 010 A1

Auf diese Weise kann somit die Schätzung der initialen Lichtbogen-Leistung einmalig erfolgen, und im Fortgang dann mit der anhand der Umrechnungsparameter berechneten Regelgröße fortlaufend (insbesondere regelmäßig/periodisch) geregelt werden.

Gemäß einigen bevorzugten Ausführungsformen, Varianten oder Verfeinerungen von Ausführungsformen ist die Lichtbogen-Leistungs-Schätzeinheit, LBLSE, dazu eingerichtet, die initiale Lichtbogen-Leistung des Lichtbogens unter Verwendung einer Eingangsspannung an einem Wechselrichter, an welchem die mindestens zwei parallel geschalteten Modulstränge angeschlossen sind und/oder an einem Eingangsstrom dieses (oder: eines solchen) Wechselrichters zu bestimmen. Hierzu können alle im Stand der Technik bekannten Modelle verwendet werden, siehe z.B. die eingangs zitierten wissenschaftlichen Veröffentlichungen von Ayrton, Paukert, oder Stokes et al.

Gemäß einigen bevorzugten Ausführungsformen, Varianten oder Verfeinerungen von Ausführungsformen umfasst die Sicherheitsvorrichtung außerdem eine Ersatzmodell-Berechnungseinrichtung, EMBE, welche dazu eingerichtet ist, fortlaufend (insbesondere regelmäßig/periodisch ) in einem Normalbetrieb der Photovoltaik-Anlage mindestens ein Ersatzmodell für mindestens einen Teil der Photovoltaik-Modulstränge zu bestimmen. Beispielsweise kann für jeden der Photovoltaik-Modulstränge, oder für alle Photovoltaik-Modulstränge gemeinsam ein Ersatzmodell bestimmt werden. Bevorzugt wird für jede Gruppe von Photovoltaik-Modulsträngen, welche derselben Leistungsanpassung (regelmäßige/periodische Leistungsmaximierung oder, englisch, Maximum Power Point Tracking, MPPT) unterworfen sind, ein eigenes Ersatzmodell erstellt. Der Normalbetrieb der Photovoltaik-Anlage ist dabei insbesondere ein Zustand, in welchem kein Lichtbogen vorliegt und alle Photovoltaik-Modulstränge gemäß einem jeweils zugeordneten MPPT geregelt werden.

Die Lichtbogen-Leistungs-Schätzeinheit, LBLSE, kann dazu eingerichtet sein, die initiale Leistung des Lichtbogens unter der zusätzlichen Verwendung des bestimmten Ersatzmodells zu bestimmen. Hierdurch kann die Bestimmung der elektrischen Eigenschaften des Lichtbogens, und somit auch die Regelung zu dessen Löschung, besonders präzise erfolgen.

Gemäß einigen bevorzugten Ausführungsformen, Varianten oder Verfeinerungen von Ausführungsformen stellt die auf den Lichtbogen zurückgehende, ermittelte elektrische Leistung selbst die Regelgröße dar. In dieser verhältnismäßig einfachen Variante erfolgt somit keine Umrechnung oder sonstige Bearbeitung der ermittelten elektrischen Leistung, welche auf den Lichtbogen zurückgeht.

Gemäß einigen bevorzugten Ausführungsformen, Varianten oder Verfeinerungen von Ausführungsformen ist als das Auslöseereignis festgelegt, dass durch die Lichtbogen-Detektionseinrichtung, LBDE, der Lichtbogen detektiert wurde. Somit werden sofort Maßnahmen getroffen, um den detektierten Lichtbogen erfindungsgemäß zu löschen.

Gemäß einigen bevorzugten Ausführungsformen, Varianten oder Verfeinerungen von Ausführungsformen umfasst die Sicherheitsvorrichtung eine Vorgelagerte-Maßnahmen-Einrichtung, VGME, welche dazu eingerichtet ist, als Reaktion auf das Detektieren des Lichtbogens mindestens eine Maßnahme zum Löschen des Lichtbogens einzuleiten. Hierbei kann es sich um eine beliebige im Stand der Technik bekannte Maßnahme handeln, beispielsweise das Regeln des Eingangsstroms oder der Eingangsspannung an einem Wechselrichter auf Null oder dergleichen. Somit kann im Rahmen dieser Erfindung zunächst auf bekannte Mittel zurückgegriffen werden.

In diesen Ausführungsformen, Varianten und Verfeinerungen kann als das Auslöseereignis festgelegt sein, dass nach dem Detektieren des Lichtbogens und dem Einleiten mindestens einer Maßnahme mindestens eine der mindestens einen Maßnahme als unwirksam beurteilt wurde. In dieser Variante werden somit zunächst eine oder mehrere Maßnahmen aus dem Stand der Technik getroffen, mit dem Ziel, den Lichtbogen zu löschen, wobei im Falle des Fehlschlags die erfindungsgemäße Regelung durchgeführt wird. Je nach Einstellung, oder konkreter Ausbildung der Sicherheitsvorrichtung, kann das Auslöseereignis dann darin bestehen, dass eine der getroffenen Maßnahmen als unwirksam beurteilt wurde, oder, bevorzugt, dass alle getroffenen Maßnahmen als unwirksam beurteilt wurden.

Eine Beurteilung als unwirksam kann beispielsweise dann erfolgen, falls der detektierte Lichtbogen weiterhin detektiert wird (und/oder beispielsweise die auf den Lichtbogen zurückgehende ermittelte Leistung im Wesentlichen unverändert ist), aber auch, falls eine Rückmeldung einer Einheit, welche eine Maßnahme durchführt, ergibt, dass die Maßnahme nicht, oder nicht in ausreichendem Maße, durchgeführt wurde.

Gemäß einigen bevorzugten Ausführungsformen, Varianten oder Verfeinerungen von Ausführungsformen umfasst die Sicherheitsvorrichtung eine Nachgelagerte-Maßnahmen-Einrichtung, NGME, und eine erste Zeitmesseinrichtung, welche dazu eingerichtet ist, eine Zeit T1 zu messen, während welcher die Regelungseinrichtung, RE, die Regelgröße auf den Sollwert zu regeln versucht, ohne den Sollwert zu erreichen Die Nachgelagerte-Maßnahmen-Einrichtung, NGME, ist vorteilhaft dazu eingerichtet, mindestens eine zusätzliche oder alternative Maßnahme (insbesondere aus dem Stand der Technik) zum Löschen des Lichtbogens einzuleiten und/oder einen Fehlerzustand auszulösen und/oder ein Warnsignal auszusenden, sobald die von der ersten Zeitmessungseinrichtung gemessene Zeit T1 einen zugehörigen Grenzwert T1max erreicht hat.

Wird somit nicht innerhalb des gewünschten Zeitrahmens ein Löschen des Lichtbogens erzielt, können die genannten zusätzlichen Maßnahmen durchgeführt werden.

Gemäß einigen bevorzugten Ausführungsformen, Varianten oder Verfeinerungen von Ausführungsformen umfasst die Sicherheitsvorrichtung außerdem eine zweite Zeitmessungseinrichtung, welche dazu eingerichtet ist, eine Zeit T2 ab Erreichen des Sollwerts durch die Regelgröße zu messen, während welcher sich die Regelgröße in einem vorbestimmten Toleranzbereich um den Sollwert befindet. Die Regelungseinrichtung, RE, ist vorteilhaft dazu eingerichtet, das Regeln zu beenden, sobald die von der zweiten Zeitmessungseinrichtung gemessene Zeit T2 einen zugehörigen Grenzwert T2max erreicht hat. Auf diese Weise wird eine automatische Rückkehrbedingung in den Normalbetrieb bereitgestellt.

Die Bezeichnungen "erste Zeitmesseinrichtung" und "zweite Zeitmesseinrichtung" sind hier lediglich unterschiedliche Bezeichnungen zur Verbesserung des Verständnisses, und implizieren keine Reihenfolge, ein- oder gegenseitige Implikation oder dergleichen.

Gemäß einem zweiten Aspekt stellt die Erfindung außerdem einen Wechselrichter bereit, welcher die Sicherheitsvorrichtung gemäß einer Ausführungsform des ersten Aspekts der vorliegenden Erfindung umfasst. Der Wechselrichter und die Regelungseinrichtung, RE, sind dazu eingerichtet, dass die Regelungseinrichtung, RE, zum Regeln der Regelgröße bei Bedarf an dem Wechselrichter eine Gleichspannung und/oder einen Gleichstrom einstellen kann, welche(r) einer Einspeisung von elektrischer Leistung von außerhalb in die Photovoltaik-Anlage entspricht. Diese Funktion erlaubt dem Wechselrichter eine Vielzahl von Regelungsmöglichkeiten, um vielfältige Arten von Lichtbögen an unterschiedlichen Positionen auf erfindungsgemäße Weise löschen zu können. Bei dem DC-Regelkreis kann es sich um einen DC-Regelkreis des Wechselrichters, insbesondere einen DC-DC-Regelkreis des Wechselrichters handeln.

In Varianten kann auch die Sicherheitsvorrichtung den Wechselrichter umfassen.

Gemäß einem dritten Aspekt stellt die Erfindung außerdem eine Photovoltaik-Anlage bereit, welche eine Sicherheitsvorrichtung nach einer Ausführungsform des ersten Aspekts der vorliegenden Erfindung sowie einen Wechselrichter umfasst, insbesondere einen Wechselrichter nach einer Ausführungsform des zweiten Aspekts der vorliegenden Erfindung. Der Wechselrichter kann Teil der Sicherheitsvorrichtung sein oder umgekehrt. Die Photovoltaik-Anlage umfasst außerdem mindestens zwei parallelgeschaltete, mit dem Wechselrichter über eine Sammelleitung verbundene Photovoltaik-Modulstränge.

Gemäß einem vierten Aspekt stellt die Erfindung außerdem ein Verfahren zum Betreiben einer Photovoltaik-Anlage mit mindestens zwei parallelgeschalteten Photovoltaik-Modulsträngen, welche in einer Sammelleitung zusammengeführt werden, an welche ein DC-Regelkreis angeschlossen ist, bereit. Das Verfahren umfasst zumindest die Schritte:

Detektieren eines Lichtbogens in der Photovoltaik-Anlage;
Ermitteln einer auf den detektierten Lichtbogen zurückgehenden elektrischen Leistung;
Erzeugen einer Regelgröße basierend auf der ermittelten elektrischen Leistung;
Erfassen eines Auslöseereignisses; und
Regeln, in Reaktion auf das Auslöseereignis, der Regelgröße auf einen Sollwert durch Einstellen einer Gleichspannung oder eines Gleichstroms an dem DC-Regelkreis.

Weitere bevorzugte Ausführungsformen, Varianten und Weiterbildungen von Ausführungsformen ergeben sich aus den abhängigen Patentansprüchen sowie aus der Beschreibung unter Bezugnahme auf die Figuren.

Kurze Beschreibung der Figuren

Die Erfindung wird nachstehend anhand von Ausführungsbeispielen in den Figuren der Zeichnungen näher erläutert. Die teilweise schematisierte Darstellung zeigen hierbei:

Fig. 1    ein schematisches Blockdiagramm zum Erläutern einer Sicherheitsvorrichtung gemäß einer Ausführungsform der vorliegenden Erfindung, eines Wechselrichters gemäß einer weiteren Ausführungsform der vorliegenden Erfindung sowie einer Photovoltaik-Anlage gemäß noch einer weiteren Ausführungsform der vorliegenden Erfindung;

Fig. 2    ein schematisches Blockdiagramm zum Erläutern weiterer Ausführungsformen der vorliegenden Erfindung; und

Fig. 3    ein schematisches Flussdiagramm zum Erläutern eines Verfahrens gemäß noch einer weiteren Ausführungsform der vorliegenden Erfindung.

In sämtlichen Figuren sind gleiche bzw. funktionsgleiche Elemente und Vorrichtungen - sofern nichts anderes angegeben ist - mit denselben Bezugszeichen versehen worden. Die Nummerierung von Verfahrensschritten erfolgt vorrangig zu deren leichterer Unterscheidung und impliziert nicht zwangsläufig eine zeitliche Reihenfolge, obwohl eine zeitliche Reihenfolge gemäß der Reihenfolge der Nummerierung eine mögliche Variante darstellt. Verschiedene Verfahrensschritte können auch teilweise oder vollständig gleichzeitig miteinander ausgeführt werden. Auch ein mehrfaches oder iteratives Ausführen von Verfahrensschritten ist möglich.

Detaillierte Beschreibung der Figuren

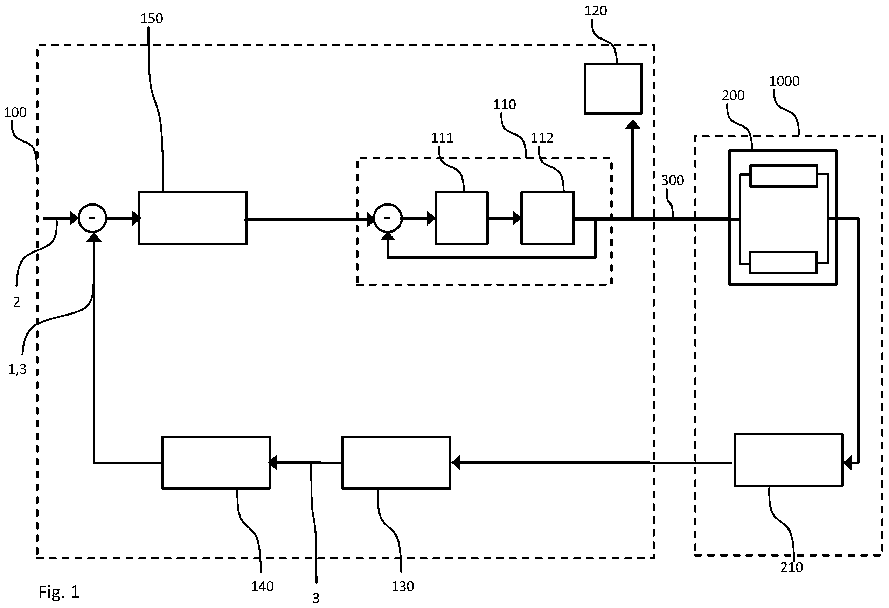

Fig. 1 zeigt ein schematisches Blockdiagramm zum Erläutern einer Vorrichtung gemäß einer Ausführungsform der vorliegenden Erfindung, d.h. einer Sicherheitsvorrichtung 100 für eine Photovoltaikanlage 1000 mit mindestens zwei parallelgeschalteten Photovoltaik-Modulsträngen 200, welche in einer Sammelleitung 300 zusammengeführt werden, an welche ein DC-Regelkreis 110 angeschlossen ist. Fig. 1 zeigt eine grundlegende Ausführungsform zur Erklärung der grundlegenden Funktionsweise, während die nachfolgenden Figuren zusätzliche Varianten und Details darstellen.

Der DC-Regelkreis 110 ist hier als DC-DC-Regelkreis mit einem U/I-Regler 111 und einer U/I-Strecke 112 dargestellt; er kann Teil eines Wechselrichters sein. In Fig. 1 ist außerdem der DC-Regelkreis 110 als Teil der Sicherheitsvorrichtung 100 dargestellt und die Sicherheitsvorrichtung 100 als Teil eines Wechselrichters des DC-Regelkreis 110 kann jedoch auch separat von der Sicherheitsvorrichtung 100 sein, beispielsweise in einem separat von der Sicherheitsvorrichtung 100 ausgebildeten Wechselrichter.

Die Sicherheitsvorrichtung 100 gemäß Fig. 1 umfasst eine Lichtbogen-Detektionseinrichtung, LBDE 120, welche dazu eingerichtet ist, einen Lichtbogen in der Photovoltaik-Anlage 1000 zu detektieren, insbesondere in dem Photovoltaik-Feld, welches die mindestens zwei parallel geschalteten Modulstränge 200 umfasst. Hierzu wertet die Lichtbogen-Detektionseinrichtung, LBDE 120, typischerweise das Rauschverhalten elektrischer Signale auf der Sammelleitung 300 aus, insbesondere deren HF-Komponente oder einen Teil davon.

Die Sicherheitsvorrichtung 100 umfasst außerdem eine Ermittlungseinrichtung 130 zum Ermitteln einer auf den Lichtbogen zurückgehenden elektrischen Leistung 3. Die Leistung des Lichtbogens ist nicht direkt messbar, u.a. da seine genaue Position unbekannt ist und die PhotovoltaikAnlage 1000 nicht überall über Strom- oder Spannungs(messer)sensoren verfügt. Die tatsächliche Leistung des Lichtbogens verändert das Signal auf der Sammelleitung 300 daher erst nach dem Durchlaufen einer (hier abstrakt dargestellten) Übertragungsdämpfung 210, verursacht durch die Photovoltaik-Modulstränge 200, deren Verkabelung, und weitere bekannte oder unbekannte dämpfende Elemente.

Somit ist, beispielsweise durch Vergleich mit den Signaleigenschaften im Normalbetrieb der Photovoltaik-Anlage 1000 ohne Lichtbogen, durch die Ermittlungseinrichtung 130 bestimmbar, welcher Teil der auf der Sammelleitung 300 anliegenden elektrischen Leistung auf den Lichtbogen zurückgeht. Beispielsweise kann eine auf den Lichtbogen zurückgehende Leistung 3 von 2 µW durch die Ermittlungseinrichtung 130 ermittelt werden.

Wie im Vorangehenden bereits erläutert wurde, kann die Ermittlungseinrichtung 130 eine Lichtbogen-Leistungs-Messeinrichtung, LBLME, für eine Hochfrequenz-, HF-, Komponente sein oder umfassen, welche dazu eingerichtet ist, die auf den Lichtbogen zurückgehende elektrische Leistung 3 zu messen. Die HF-Komponente kann dabei eine leitungsgebundene und/oder strahlungsbasierte HF-Komponente sein.

Die Sicherheitsvorrichtung 100 umfasst außerdem eine Regelgröße-Erzeugungseinrichtung, RGEE 140, welche dazu eingerichtet ist, basierend auf der ermittelten elektrischen Leistung 3 eine Regelgröße 1 zu erzeugen. In einem einfachen Fall, wie in Fig. 1 dargestellt, kann die auf den Lichtbogen zurückgehende elektrische Leistung 3 durch die RGEE 140 unverändert (oder im Wesentlichen unverändert) als Regelgröße 1 bereitgestellt werden.

Die Sicherheitsvorrichtung 100 umfasst außerdem eine Regelungseinrichtung, RE 150, welche dazu eingerichtet ist, in Reaktion auf ein Auslöseereignis, durch Einstellen einer Gleichspannung oder eines Gleichstroms an dem DC-Regelkreis 110 die Regelgröße 1 auf einen Sollwert 2 zu regeln. Der Sollwert 2 kann beispielsweise null sein.

Alternativ kann der Sollwert 2 auch ein bekannter Wert sein (beispielsweise 0,2 pW), welchen die Ermittlungseinrichtung 130 selbst dann erfasst, wenn kein Lichtbogen brennt. Auf diese Weise wird somit auf den Normalzustand ohne Lichtbogen hin geregelt. Alternativ kann auch die Regelgröße-Erzeugungseinrichtung, RGEE 140, diesen Wert (beispielsweise 0,2 µW) bereits von der ermittelten, auf den Lichtbogen zurückgehenden elektrischen Leistung 3 (beispielsweise 2 pW) abziehen und somit die Regelgröße 1 offset-bereinigt (hier also beispielsweise 1,8 µW) erzeugen, sodass die Regelungseinrichtung 150 dann dazu eingerichtet ist, auf Null als Sollwert 2 zu regeln.

Zu den verschiedenen Varianten zur Bereitstellung des Auslöseereignisses wurde im Vorangehenden schon einiges erläutert. In einem einfachen Fall kann das Auslöseereignis darin bestehen, dass ein Lichtbogen detektiert wird. In anderen Varianten kann das Auslöseereignis darin bestehen, dass eine zuvor in Reaktion auf das Detektieren des Lichtbogens ausgelöste Maßnahme als unwirksam beurteilt wurde. Auf diese Weise ist wählbar, ob die erfindungsgemäße Regelung die erste Maßnahme auf das Detektieren eines Lichtbogens ist, oder ob sie erst nachgelagert durchgeführt wird.

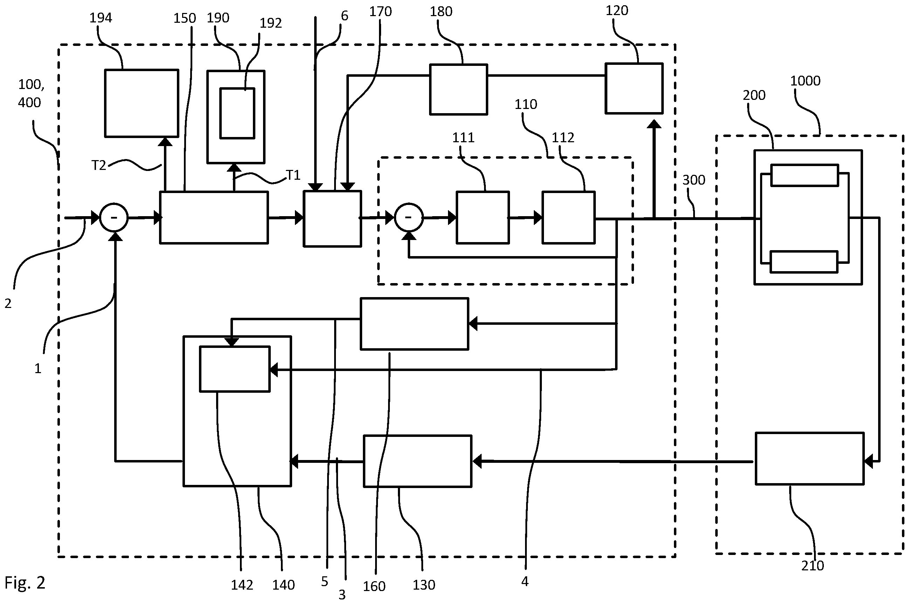

Fig. 2 zeigt eine Variante der Sicherheitsvorrichtung 100 aus Fig. 1 und damit eine weitere Ausführungsform der vorliegenden Erfindung.

Die Variante nach Fig. 2 unterscheidet sich von der nach Fig. 1 insbesondere in der Art und Weise, wie die Regelgröße-Erzeugungseinrichtung, RGEE 140, die Regelgröße 1 erzeugt. Bei der Variante nach Fig. 2 werden zusätzliche Mittel und Überlegungen eingesetzt, um die "tatsächliche" Leistung des Lichtbogens bestmöglich zu bestimmen oder zu schätzen, um diese noch besser durch die Regelung verringern zu können.

Hierzu umfasst die Regelgröße-Erzeugungseinrichtung, RGEE 140 gemäß Fig. 2 außerdem eine Lichtbogen-Leistungs-Schätzeinheit, LBLSE 142, welche dazu eingerichtet ist, eine initiale Lichtbogen-Leistung des Lichtbogens zu schätzen, bevorzugt einmalig für jeden detektierten Lichtbogen vor dem Beginn der erfindungsgemäßen Regelung.

Hierzu kann eine Vielzahl von Modellen und Eingangsgrößen verwendet werden, beispielsweise, wie in Fig. 2 gezeigt, anhand von Spannungswerten und/oder Stromwerten 4 zum Zeitpunkt des Brennens des Lichtbogens an dem DC-Regelkreis 110. Insbesondere kann die Lichtbogen-Leistungs-Schätzeinheit, LBLSE 142, dazu eingerichtet sein, die initiale Lichtbogen-Leistung des Lichtbogens unter Verwendung einer Eingangsspannung an einem Wechselrichter 400, an welchem die Modulstränge 200 angeschlossen sind und/oder eines Eingangsstroms dieses Wechselrichters 400 zu bestimmen.

Aus der eingangs genannten wissenschaftlichen Veröffentlichung von J. Paukert kann beispielsweise nachfolgende Formel (1) entnommen werden:

$$U_{\mathrm{arc}} = \left(20 + 0.534 x_{\mathrm{gap}}\right) I_{\mathrm{arc}}^{0.12}, \quad (1)$$

wobei $U_{arc}$ den Schätzwert für die elektrische Spannung des detektierten Lichtbogens (engl. "arc") darstellt, und $I_{arc}$ den am DC-DC-Regelkreis 110 erfassten Stromwert 4, der hier durch die Lichtbogen-Leistungs-Schätzeinheit, LBLSE 142 als elektrischer Strom des detektierten Lichtbogens angenommen wird. Hierbei ist $x_{gap}$ der Elektrodenabstand in Millimetern, der bei einem spontan (außerhalb eines Teststands) auftretenden Lichtbogen typischerweise unbekannt ist und daher durch einen fixen Schätzwert ersetzt werden kann, beispielsweise durch einen Schätzwert von 0. Aus Formel (1) ist ersichtlich, dass bei typischen Elektrodenabständen in typischen Photovoltaik-Anlagen 1000 die hierdurch entstehende Unsicherheit im einstelligen Prozentbereich liegt.

Demnach kann der Schätzwert $U_{arc}$ für die elektrische Spannung des detektierten Lichtbogens zum Beispiel mit der nachfolgenden Formel (2) berechnet werden:

$$U_{\mathrm{arc}} = 20\, I_{\mathrm{arc}}^{0.12}, \quad (2)$$

Mit anderen Worten kann der Schätzwert $U_{arc}$ für die elektrische Spannung des detektierten Lichtbogens eine Potenz p des erfassten Stromwerts 4, multipliziert mit einer Konstante k, umfassen oder daraus bestehen, also allgemein:

$$U_{\mathrm{arc}} = k \cdot I_{\mathrm{arc}}^{p}, \quad (3),.$$

wobei bevorzugt 0<*p*<1 ist und *k*>1.

Aus dem Modell der eingangs erwähnten wissenschaftlichen Veröffentlichung von Hertha Marks Ayrton kann alternativ auch folgende Formel (4) abgeleitet werden:

$$U_{\mathrm{arc}} = A + B x_{\mathrm{gap}} + \frac{C + D x_{\mathrm{gap}}}{I_{\mathrm{arc}}}, \quad (4)$$

wobei *A* der Spannungsabfall über die Elektrode, *B* der Spannungsgradient, und *C* und *D* Konstanten sind, welche den nicht-linearen Impedanzverlauf des Lichtbogens beschreiben, welche in der Regel empirisch ermittelt werden. Der Schätzwert $U_{arc}$ für die elektrische Spannung des durch die Lichtbogen-Detektionseinrichtung, LBDE 120, detektierten Lichtbogens kann somit (z.B. gemäß Formel (4)) als eine Summe berechnet werden, wobei der erfasste Stromwert $I_{arc}$ in einem Nenner eines der Summanden der Summe auftritt oder diesen Nenner bildet.

Es versteht sich, dass je nach geplantem Einsatzort und der Ausgestaltung der Sicherheitsvorrichtung 100 oder der Photovoltaik-Anlage 1000 auch andere bekannte Formeln zur Berechnung des Schätzwerts $U_{arc}$ für die elektrische Spannung des detektierten Lichtbogens verwendet werden können, beispielsweise aus der eingangs erwähnten wissenschaftlichen Veröffentlichung von A. D. Stokes und W. T. Oppenlander.

Aus dem Schätzwert $U_{arc}$ für die elektrische Spannung des Lichtbogens und dem erfassten Stromwert als Schätzwert $I_{arc}$ für den elektrischen Strom des detektierten Lichtbogens kann die Lichtbogen-Leistungs-Schätzeinheit, LBLSE 142, gemäß

$$P_{\mathrm{arc}} = U_{\mathrm{arc}} I_{\mathrm{arc}} \quad (5)$$

den Schätzwert $P_{arc}$ für die elektrische Leistung des detektierten Lichtbogens berechnen. Ein Modell für die Berechnung des Schätzwerts $P_{arc}$ kann somit aus einer Formel (oder einem Untermodell) für die Berechnung des Schätzwerts $U_{arc}$ für die elektrische Spannung des detektierten Lichtbogens in Kombination mit Formel (5) bestehen, oder diese umfassen. Alternativ kann ein Modell für die Berechnung des Schätzwerts $P_{arc}$ für die elektrische Leistung des detektierten Lichtbogens auch direkt eine Formel oder ein Untermodell für eine Leistungsberechnung sein oder aufweisen.

Alternativ oder zusätzlich kann die Lichtbogen-Leistungs-Schätzeinheit, LBLSE 142, mindestens ein Ersatzmodell für zumindest einen Teil der Photovoltaik-Anlage 1000 verwenden.

Die Sicherheitsvorrichtung 100 kann hierfür eine Ersatzmodell-Berechnungseinrichtung, EMBE 160, aufweisen welche dazu eingerichtet ist, fortlaufend (insbesondere regelmäßig/periodisch) in einem Normalbetrieb der Photovoltaik-Anlage 1000 mindestens ein Ersatzmodell 5 für mindestens einen Teil der Photovoltaik-Modulstränge 200 zu bestimmen.

Beispielsweise kann für jeden der Photovoltaik-Modulstränge 200, oder für alle Photovoltaik-Modulstränge 200 gemeinsam ein Ersatzmodell 5 bestimmt werden. Bevorzugt wird für jede Gruppe von Photovoltaik-Modulsträngen 200, welche derselben Leistungsanpassung (regelmäßige/periodische Leistungsmaximierung oder, englisch, Maximum Power Point Tracking, MPPT) unterworfen sind, ein eigenes Ersatzmodell 5 erstellt. Der Normalbetrieb der Photovoltaik-Anlage 1000 ist dabei insbesondere ein Zustand, in welchem kein Lichtbogen vorliegt.

Das jeweilige Ersatzmodell 5 kann beispielsweise mithilfe der Methode der kleinsten Quadrate oder eines RLS-Algorithmus mit einer Spannungsquelle $U_{0PV}$ und einem Innenwiderstand $R_{iPv}$ geschätzt werden. Der Innenwiderstand $R_{iPV}$ kann durch ein linearisiertes Modell der PV-Kennlinie gegeben sein. Der Schätzwert $U_{arc}$ für die elektrische Spannung des detektierten Lichtbogens kann somit beispielsweise auch bestimmt werden durch:

$$U_{arc} = U_{PV} - U_{inverter} = U_{0PV} - R_{iPV} * I_{inverter} - U_{inverter},$$

wobei sich die mit "inverter" bezeichneten Größen jeweils auf den Wechselrichter beziehen.

Fig. 2 zeigt einen Wahlschalter 170, mittels welchem zwischen dem Normalbetrieb, in welchem Regelparameter 6 für den DC-Regelkreis 110 typischerweise von einer Leistungsanpassung (Maximum-Power-Point-Tracking) erhalten werden, als Reaktion auf das Auslöseereignis auf die erfindungsgemäße Regelung durch die Regelungseinrichtung, RE 150, umgestellt wird. Das Auslöseereignis kann gemäß einer der im Vorangehenden beschriebenen Varianten festgelegt sein.

In Fig. 2 ist beispielhaft gezeigt, dass die Sicherheitsvorrichtung 100 eine Vorgelagerte-Maßnahmen-Einrichtung, VGME 180, welche dazu eingerichtet ist, als Reaktion auf das Detektieren des Lichtbogens mindestens eine Maßnahme zum Löschen des Lichtbogens einzuleiten. In diesem Fall kann als das Auslöseereignis festgelegt sein, dass nach dem Detektieren des Lichtbogens und dem Einleiten mindestens einer Maßnahme durch die Vorgelagerte-Maßnahmen-Einrichtung, VGME 180, mindestens eine der mindestens einen Maßnahme (oder alle Maßnahmen) als unwirksam beurteilt wurde(n).

Bei der Variante gemäß Fig. 2 ist die Regelgröße-Erzeugungseinrichtung, RGEE 140, außerdem dazu eingerichtet, aus der geschätzten initialen Lichtbogen-Leistung sowie aus der ermittelten, auf den Lichtbogen zurückgehenden elektrischen Leistung 3 Umrechnungsparameter zu bestimmen. Auf diese Weise kann ein mathematischer Zusammenhang zwischen der elektrischen Leistung 3, welche die Ermittlungseinrichtung 130 ermittelt hat (beispielsweise 2 pW) und der geschätzten elektrischen Leistung des detektierten Lichtbogens (beispielsweise 123 W) hergestellt werden.

Die Regelgröße-Erzeugungseinrichtung, RGEE 140, ist dazu eingerichtet, daraufhin die Regelgröße 1 unter Verwendung dieser Umrechnungsparameter basierend auf der ermittelten elektrischen Leistung 3 zu erzeugen. Insbesondere kann die ermittelte elektrische Leistung 3, welche auf den Lichtbogen (hier insbesondere ein DC-Lichtbogen) zurückgeht, mit Hilfe der Umrechnungsparameter in einen Offset-freien Wert im Bereich zwischen 5 W und 5000 W umgerechnet werden. Dies erleichtert und stabilisiert die Reglung durch die Regelungseinrichtung, RE 150.

Die Sicherheitsvorrichtung 100 kann außerdem eine Nachgelagerte-Maßnahmen-Einrichtung, NGME 190 aufweisen, und eine erste Zeitmesseinrichtung 192, welche dazu eingerichtet ist, eine Zeit T1 zu messen, während welcher die Regelungseinrichtung, RE 150, die Regelgröße 1 auf den Sollwert 2 zu regeln versucht, ohne den Sollwert zu erreichen. Die NGME 190 kann dazu eingerichtet sein, mindestens eine zusätzliche oder alternative Maßnahme zum Löschen des Lichtbogens einzuleiten und/oder einen Fehlerzustand auszulösen und/oder ein Warnsignal auszusenden, sobald die von der ersten Zeitmessungseinrichtung 192 gemessene Zeit T1 einen zugehörigen Grenzwert T1max erreicht hat. Beispielsweise kann ein Warnsignal an eine Kontrollstelle oder auf ein Endgerät eines Nutzers gesendet werden.

Ferner kann die Sicherheitsvorrichtung 100 eine zweite Zeitmessungseinrichtung 194 aufweisen, welche dazu eingerichtet ist, eine Zeit T2 ab Erreichen des Sollwerts (2) durch die Regelgröße 1 zu messen, während welcher sich die Regelgröße 1 in einem vorbestimmten Toleranzbereich um den Sollwert 2 befindet. Hat die gemessene Zeit T2 einen zugehörigen Grenzwert T2max erreicht (wobei T2max beispielsweise im Bereich von 0,1 Sekunden bis 2,5 Sekunden liegen kann), wird davon ausgegangen, dass der Lichtbogen erfolgreich gelöscht wurde, und das Regeln durch die Regelungseinrichtung, RE 150, wird beendet. Dies kann dadurch erfolgen, dass die zweite Zeitmessungseinrichtung 194 ein entsprechendes Signal an den Wahlschalter 170 oder an die Regelungseinrichtung, RE 150, selbst sendet. Somit kann die erfindungsgemäße Regelung automatisch enden und der Normalbetrieb wiederhergestellt werden. In dem Fall, dass der Lichtbogen in Wirklichkeit noch nicht gelöscht wurde, würde die Lichtbogen-Detektionseinrichtung, LBDE 120, erneut einen Lichtbogen detektieren und die Regelung würde erneut beginnen.

Wie im Vorangehenden erläutert wurde, stellt die Erfindung auch einen Wechselrichter 400 bereit, welcher die Sicherheitsvorrichtung 100 umfasst. Dabei kann insbesondere vorgesehen sein, dass die Regelungseinrichtung, RE 150, zum Regeln der Regelgröße bei Bedarf an dem Wechselrichter 400 eine Gleichspannung oder einen Gleichstrom einstellen kann, welche einer Einspeisung von elektrischer Leistung von außerhalb in die Photovoltaik-Anlage 1000 entspricht.

Die Erfindung stellt außerdem eine Photovoltaik-Anlage 1000 bereit, welche mindestens zwei parallelgeschaltete, mit dem Wechselrichter verbundene Photovoltaik-Modulstränge 200, die Sicherheitsvorrichtung 100, die Sammelleitung 300, sowie den Wechselrichter 400 umfasst.

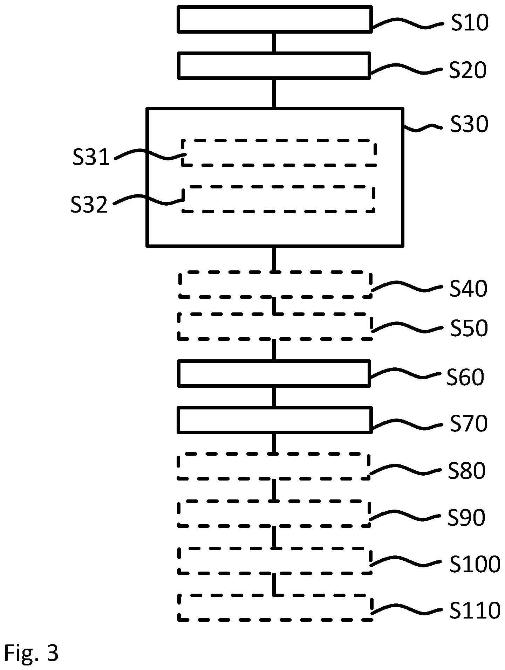

Fig. 3 zeigt ein schematisches Flussdiagramm zur Erläuterung eines Verfahrens gemäß einer weiteren Ausführungsform der vorliegenden Erfindung, d.h. eines Verfahrens zum Betreiben einer Photovoltaik-Anlage 1000 mit mindestens zwei parallelgeschalteten Photovoltaik-Modulsträngen 200, welche in einer Sammelleitung 300) zusammengeführt werden, an welche ein DC-Regelkreis 110 angeschlossen ist.

Das Verfahren kann insbesondere mit der erfindungsgemäßen Sicherheitsvorrichtung 100, dem erfindungsgemäßen Wechselrichter 400, und/oder in der erfindungsgemäßen Photovoltaik-Anlage 1000 durchgeführt werden, aber auch unabhängig davon. Dementsprechend kann das Verfahren gemäß allen in Bezug auf die erfindungsgemäße Sicherheitsvorrichtung 100, den erfindungsgemäßen Wechselrichter 400, und die erfindungsgemäße Photovoltaik-Anlage 1000 beschriebenen Optionen, Varianten, und Verfeinerungen angepasst werden und umgekehrt. Dementsprechend wird bei der Beschreibung des Verfahrens gemäß Fig. 3 auch auf Bezugszeichen der vorangehenden Fig. 1 und Fig. 2 zurückgegriffen, ohne dass dies einschränkend verstanden werden soll.

In einem Schritt S10 des Verfahrens wird ein Lichtbogen in der Photovoltaik-Anlage 1000 detektiert, beispielsweise wie dies im Vorangehenden mit Bezug auf die Lichtbogen-Detektionseinrichtung, LBDE 120, beschrieben wurde.

In einem Schritt S20 wird eine auf den detektierten Lichtbogen zurückgehende elektrische Leistung 3 ermittelt, beispielsweise wie dies im Vorangehenden mit Bezug auf die Ermittlungseinrichtung 130 beschrieben wurde.

In einem Schritt S30 wird eine Regelgröße 1 basierend auf der ermittelten elektrischen Leistung 3 erzeugt, beispielsweise wie dies im Vorangehenden mit Bezug auf die Ermittlungseinrichtung 130 beschrieben wurde. In einer einfachen Variante kann die ermittelte elektrische Leistung 3 selbst als Regelgröße 1 bereitgestellt werden.

Bevorzugt kann dafür jedoch in einem Schritt S31 eine initiale Lichtbogen-Leistung geschätzt werden, etwa wie dies im Vorangehenden mit Bezug auf die Lichtbogen-Leistungs-Schätzeinheit, LBLSE 142 beschrieben wurde. Daraufhin können in seinem Schritt S32 aus der geschätzten initialen Lichtbogen-Leistung sowie aus der ermittelten, auf den Lichtbogen zurückgehenden elektrischen Leistung 3 Umrechnungsparameter bestimmt werden, welche in dem Schritt S30 zur Erzeugung der Regelgröße 1 verwendet werden, etwa wie dies im Vorangehenden bereits mit Bezug auf die Regelgröße-Erzeugungseinrichtung, RGEE 140, erläutert wurde.

So kann vorteilhaft eine fortlaufend, insbesondere regelmäßig oder periodisch, ermittelte, auf den Lichtbogen zurückgehende elektrische Leistung 3 fortlaufend, insbesondere regelmäßig oder periodisch, mittels der Umrechnungsparameter umgerechnet werden, um eine gut handhabbare, fortlaufend aktuelle gehaltene Regelgröße 1 zu erzeugen.

In einem Schritt S60 wird ein Auslöseereignis erfasst, beispielsweise wie dies im Vorangehenden bereits mit Bezug auf die Sicherheitsvorrichtung 100 erläutert wurde. In einer Variante kann somit das Erfassen S60 des Auslöseereignisses mit dem Detektieren S10 des Lichtbogens zusammenfallen.

In anderen Varianten kann zunächst ein optionaler Schritt S40 durchgeführt werden, in welchem als Reaktion auf das Detektieren S10 des Auslöseereignisses zunächst vorgelagerte Maßnahmen zum Löschen des Lichtbogens durchgeführt werden, etwa wie dies im Vorangehenden mit Bezug auf die Vorgelagerte-Maßnahmen-Einrichtung, VGME 180, bereits erläutert wurde. Bei diesen Varianten kann in einem Schritt S50 geprüft werden, ob die in Schritt S40 durchgeführte(n) Maßnahme(n) wirksam waren. Das Auslöseereignis für den Schritt S60 kann somit darin liegen, dass eine, oder alle, der durchgeführte(n) Maßnahme(n) in dem Schritt S50 als unwirksam zum Löschen des Lichtbogens beurteilt wurden.

In einem Schritt S70 wird in Reaktion auf das Auslöseereignis, der Regelgröße 1 auf einen Sollwert 2 geregelt, indem ein Wert einer Gleichspannung oder eines Gleichstroms an dem DC-Regelkreis 110 eingestellt wird, etwa wie dies im Vorangehenden bereits mit Bezug auf die Regelungseinrichtung, RE 150, erläutert wurde.

In einem optionalen Schritt S80 kann eine Zeit T1 gemessen werden, während welcher die Regelungseinrichtung, RE 150, versucht die Regelgröße 1 auf den Sollwert 2 zu regeln, ohne den Sollwert 2 zu erreichen, d.h., eine Zeit T1 während welcher das Regeln S70 erfolglos versucht wird. Falls diese gemessene Zeit T1 einen zugehörigen Grenzwert T1max erreicht, kann in einem Schritt S90 mindestens eine zusätzliche oder alternative Maßnahme zum Löschen des Lichtbogens eingeleitet werden und/oder ein Fehlerzustand ausgelöst werden und/oder ein Warnsignal ausgesendet werden. Der Grenzwert T1max kann beispielsweise in einem Bereich zwischen 0,1 Sekunden und 2,5 Sekunden liegen.

In einem weiteren optionalen Schritt S100 kann eine Zeit T2 ab Erreichen des Sollwerts 2 durch die Regelgröße 1 gemessen werden, während welcher sich die Regelgröße 1 in einem vorbestimmten Toleranzbereich um den Sollwert 2 befindet (beispielsweise in einem prozentualen Toleranzbereich wie etwa 110% um den Sollwert 2 herum, oder in einem absoluten Toleranzbereich). In einem Schritt S110 kann dann das Regeln S70 beendet werden (also zum Normalbetrieb zurückgekehrt werden), sobald die gemessene Zeit T2 einen zugehörigen Grenzwert T2max erreicht hat.

**Patentansprüche**

1. Sicherheitsvorrichtung (100) für eine Photovoltaik-Anlage mit mindestens zwei parallelgeschalteten Photovoltaik-Modulsträngen (200), welche in einer Sammelleitung (300) zusammengeführt werden, an welche ein DC-Regelkreis (110) angeschlossen ist, wobei die Sicherheitsvorrichtung (100) zumindest umfasst:

   eine Lichtbogen-Detektionseinrichtung, LBDE (120), welche dazu eingerichtet ist, einen Lichtbogen in der PhotovoltaikAnlage (1000) zu detektieren;
   eine Ermittlungseinrichtung (130) zum Ermitteln einer auf den Lichtbogen zurückgehenden elektrischen Leistung (3);
   eine Regelgröße-Erzeugungseinrichtung, RGEE (140), welche dazu eingerichtet ist, basierend auf der ermittelten elektrischen Leistung (3) eine Regelgröße (1) zu erzeugen; und
   eine Regelungseinrichtung, RE (150), welche dazu eingerichtet ist, in Reaktion auf ein Auslöseereignis, durch Einstellen einer Gleichspannung oder eines Gleichstroms an dem DC-Regelkreis (110) die Regelgröße (1) auf einen Sollwert (2) zu regeln.

2. Sicherheitsvorrichtung (100) nach Anspruch 1, wobei
   die Ermittlungseinrichtung (130) eine Lichtbogen-Leistungs-Messeinrichtung, LBLME, für eine Hochfrequenz-, HF-, Komponente ist, welche dazu eingerichtet ist, die auf den Lichtbogen zurückgehende elektrische Leistung (3) zu messen.

3. Sicherheitsvorrichtung (100) nach Anspruch 2,
   wobei die HF-Komponente eine leitungsgebundene und/oder strahlungsbasierte HF-Komponente ist.

4. Sicherheitsvorrichtung (100) nach einem der Ansprüche 1 bis 3,
   wobei die Regelgröße-Erzeugungseinrichtung, RGEE (140), außerdem eine Lichtbogen-Leistungs-Schätzeinheit, LBLSE, (142) umfasst, welche dazu eingerichtet ist, eine initiale Lichtbogen-Leistung des Lichtbogens zu schätzen, und
   wobei die Regelgröße-Erzeugungseinrichtung, RGEE (140), außerdem dazu eingerichtet ist, aus der geschätzten initialen Lichtbogen-Leistung sowie aus der ermittelten, auf den Lichtbogen zurückgehenden elektrischen Leistung (3) Umrechnungsparameter zu bestimmen, mittels welchen die Regelgröße-Erzeugungseinrichtung, RGEE (140), daraufhin die Regelgröße (1) basierend auf der ermittelten elektrischen Leistung (3) erzeugt.

5. Sicherheitsvorrichtung (100) nach Anspruch 4, wobei die Regelgröße-Erzeugungseinheit, RGEE (140), dazu eingerichtet ist, laufend eine aktuelle Lichtbogen-Leistung des Lichtbogens mithilfe der Umrechnungsparameter zu berechnen und diese als Regelgröße (1) bereitzustellen.

6. Sicherheitsvorrichtung (100) nach einem der Ansprüche 4 oder 5,
   wobei die Lichtbogen-Leistungs-Schätzeinheit, LBLSE (142), dazu eingerichtet ist, die initiale Lichtbogen-Leistung des Lichtbogens unter Verwendung einer Eingangsspannung an einem Wechselrichter (400), an welchem die Modulstränge (200) angeschlossen sind und/oder eines Eingangsstroms (4) dieses Wechselrichters (400) zu bestimmen.

7. Sicherheitsvorrichtung (100) nach Anspruch 6,

   ferner umfassend eine Ersatzmodell-Berechnungseinrichtung, EMBE (160), welche dazu eingerichtet ist, fortlaufend in einem Normalbetrieb der Photovoltaik-Anlage (1000) mindestens ein Ersatzmodell (5) für mindestens einen Teil der Photovoltaik-Modulstränge (200) zu bestimmen; und
   wobei die Lichtbogen-Leistungs-Schätzeinheit, LBLSE (142), dazu eingerichtet ist, die initiale Leistung des Lichtbogens unter der zusätzlichen Verwendung des mindestens einen bestimmten Ersatzmodells (5) zu bestimmen.

8. Sicherheitsvorrichtung (100) nach einem der Ansprüche 1 bis 3,
   wobei die auf den Lichtbogen zurückgehende, ermittelte elektrische Leistung (3) selbst die Regelgröße (1) darstellt.

9. Sicherheitsvorrichtung (100) nach einem der Ansprüche 1 bis 8, wobei als Auslöseereignis festgelegt ist, dass durch die Lichtbogen-Detektionseinrichtung, LBDE (120), der Lichtbogen detektiert wurde.

10. Sicherheitsvorrichtung (100) nach einem der Ansprüche 1 bis 9,

    ferner umfassend eine Vorgelagerte-Maßnahmen-Einrichtung, VGME (180), welche dazu eingerichtet ist, als Reaktion auf das Detektieren des Lichtbogens mindestens eine Maßnahme zum Löschen des Lichtbogens einzuleiten; und
    wobei als Auslöseereignis festgelegt ist, dass nach dem Detektieren des Lichtbogens und dem Einleiten mindestens einer Maßnahme mindestens eine der mindestens einen Maßnahme als unwirksam beurteilt wurde.

11. Sicherheitsvorrichtung (100) nach einem der Ansprüche 1 bis 10,

    ferner umfassend eine Nachgelagerte-Maßnahmen-Einrichtung, NGME (190), und eine erste Zeitmesseinrichtung (192), welche dazu eingerichtet ist, eine Zeit T1 zu messen, während welcher die Regelungseinrichtung, RE (150), die Regelgröße (1) auf den Sollwert (2) zu regeln versucht, ohne den Sollwert (2) zu erreichen; und
    wobei die Nachgelagerte-Maßnahmen-Einrichtung, NGME (190), dazu eingerichtet ist, mindestens eine zusätzliche oder alternative Maßnahme zum Löschen des Lichtbogens einzuleiten und/oder einen Fehlerzustand auszulösen und/oder ein Warnsignal auszusenden, sobald die von der ersten Zeitmessungseinrichtung (192) gemessene Zeit T1 einen zugehörigen Grenzwert T1max erreicht hat.

12. Sicherheitsvorrichtung (100) nach einem der Ansprüche 1 bis 11,

    ferner umfassend eine zweite Zeitmessungseinrichtung (194), welche dazu eingerichtet ist, eine Zeit T2 ab Erreichen des Sollwerts (2) durch die Regelgröße (1) zu messen, während welcher sich die Regelgröße (1) in einem vorbestimmten Toleranzbereich um den Sollwert (2) befindet;
    wobei die Regelungseinrichtung, RE (150), dazu eingerichtet ist das Regeln zu beenden,
    sobald die von der zweiten Zeitmessungseinrichtung (194) gemessene Zeit T2 einen zugehörigen Grenzwert T2max erreicht hat.

13. Wechselrichter (400), umfassend die Sicherheitsvorrichtung (100) nach einem der Ansprüche 1 bis 12,
    wobei der Wechselrichter (400) und die Regelungseinrichtung, RE (150), dazu eingerichtet sind, dass die Regelungseinrichtung, RE (150), zum Regeln der Regelgröße bei Bedarf an dem Wechselrichter (400) eine Gleichspannung und/oder einen Gleichstrom einstellen kann, welche einer Einspeisung von elektrischer Leistung von außerhalb in die Photovoltaik-Anlage (1000) entspricht.

14. Photovoltaik-Anlage (1000), umfassend:

    eine Sicherheitseinrichtung (100) nach einem der Ansprüche 1 bis 12;
    einen Wechselrichter (400), insbesondere nach Anspruch 13; und
    mindestens zwei parallelgeschaltete, mit dem
    Wechselrichter (400) verbundene Photovoltaik-
    Modulstränge (200).

15. Verfahren zum Betreiben einer Photovoltaik-Anlage (1000) mit mindestens zwei parallelgeschalteten Photovoltaik-Modulsträngen (200), welche in einer Sammelleitung (300) zusammengeführt werden, an welche ein DC-Regelkreis (110) angeschlossen ist, umfassend zumindest die Schritte:

    Detektieren (S10) eines Lichtbogens in der PhotovoltaikAnlage (1000);
    Ermitteln (S20) einer auf den detektierten Lichtbogen zurückgehenden elektrischen Leistung;
    Erzeugen (S30) einer Regelgröße (1) basierend auf der ermittelten elektrischen Leistung (3);
    Erfassen (S60) eines Auslöseereignisses; und
    Regeln (S70), in Reaktion auf das Auslöseereignis, der Regelgröße (1) auf einen Sollwert (2) durch Einstellen einer Gleichspannung und/oder eines Gleichstroms an dem DC-Regelkreis (110).

Fig. 1

Fig. 2

S10

S20

S30

S31

S32

S40

S50

S60

S70

S80

S90

S100

S110

Fig. 3

Europäisches
Patentamt

European
Patent Office

Office européen
des brevets

# EUROPÄISCHER RECHERCHENBERICHT

Nummer der Anmeldung

EP 24 20 5281

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2013 219490 A1 (BOSCH GMBH ROBERT [DE]) 2. April 2015 (2015-04-02) * Absätze [0031] - [0066]; Ansprüche 1-12; Abbildungen 1,2,4 * ----- | 1-15 | INV. H02S50/00 |
| X | US 2017/179880 A1 (MERZ CHRISTOPHER [DE]) 22. Juni 2017 (2017-06-22) * Absätze [0014] - [0043]; Ansprüche 1-11; Abbildung 1 * ----- | 1-15 | |

RECHERCHIERTE SACHGEBIETE (IPC)

H02S

Der vorliegende Recherchenbericht wurde für alle Patentansprüche erstellt

| Recherchenort | Abschlußdatum der Recherche | Prüfer |
|---|---|---|
| Den Haag | 25. Februar 2025 | Boero, Mauro |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                    EP 24 20 5281

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2025

| Im Recherchenbericht angeführtes Patentdokument | Datum der Veröffentlichung | Mitglied(er) der Patentfamilie | | Datum der Veröffentlichung |
|---|---|---|---|---|
| DE 102013219490 A1 | 02-04-2015 | KEINE | | |
| US 2017179880 A1 | 22-06-2017 | CN | 106716823 A | 24-05-2017 |
| | | EP | 2996157 A1 | 16-03-2016 |
| | | JP | 6704898 B2 | 03-06-2020 |
| | | JP | 2017529818 A | 05-10-2017 |
| | | US | 2017179880 A1 | 22-06-2017 |
| | | WO | 2016037897 A1 | 17-03-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **HERTHA MARKS AYRTON**. The Electric Arc. D. Van Nostrand Company, 1902
- **J. PAUKERT**. The arc voltage and arc resistance of IV fault Arcs. *Proceedings of the 7th International Symposium on Switching Arc Phenomena*, 1993, 49-51

- **A. D. STOKES** ; **W. T. OPPENLANDER**. Electric arcs in open air. *Journal of Physics D: Applied Physics*, 1991, 26-35